# DEMANDE DE BREVET EUROPEEN

(11) **EP 3 456 482 A1**
(43) Date de publication de la demande: **20.03.2019**
(21) Numéro de dépôt: 18192849.0
(22) Date de dépôt: 06.09.2018
(51) Int. Cl.: B25F 5/00

(54) **DISPOSITIF MOTORISÉ POUR MACHINE-OUTIL**

(30) Priorité: 12.09.2017 CH 11302017
(71) Demandeur: Robert Renaud SA, 2017 Boudry (CH)
(72) Inventeur: Niclass, Samuel, 2000 Neuchâtel (CH)
(74) Mandataire: P&TS SA (AG, Ltd.)

(57) **Abrégé**

L'invention concerne un dispositif motorisé, notamment une électrobroche ou un moteur pour broche (1), pour machine-outil, le dispositif(1) comprenant un boitier (2) comprenant un moteur électrique alimenté par au moins un câble d'alimentation (3). Le dispositif (1) comprend un arbre (4) rotatif à une extrémité du boitier (2) et un guide (5) pour ledit câble (3) à l'extrémité opposée du boitier (2), l'arbre (4) étant destiné à entraîner un outil, le guide (5) permettant de guider la sortie du câble d'alimentation (3) en dehors du boitier (2). La broche (1) est caractérisé en ce que le guide (5) comprend un raccord mâle (6) et raccord femelle (7), le raccord mâle (6) pivotant dans le raccord femelle (7) selon d'un axe de pivotement incliné (A) par rapport à l'axe longitudinal (B) du dispositif (1), de manière à positionner ledit câble (3) en position transversale ou en position axiale par rapport à l'axe longitudinal (B) du dispositif (1).

L'invention concerne également un guide (5) pour ledit dispositif (1) et un procédé pour monter ledit dispositif (1) dans une machine-outil.

## Description

### Domaine technique

La présente invention concerne un dispositif pour machine-outil, un système comprenant ledit dispositif, un guide pour ledit dispositif et un support de données pour fabriquer ledit guide. L'invention concerne également un procédé pour monter ledit dispositif dans une machine-outil.

### Etat de la technique

Les broches pour machine-outil sont équipées d'un moteur électrique monté dans le boitier de la broche qui entraine la rotation de l'outil fixé sur la tête et ainsi l'usinage de la pièce. Le moteur est alimenté par un câble d'alimentation qui sort de la broche à l'extrémité opposée à la tête d'usinage.

Le montage d'une broche dans une machine-outil se fait axialement : l'opérateur insère la broche selon l'axe longitudinal de la broche, en s'assurant que le câble d'alimentation à l'arrière de la broche est correctement positionné pour éviter que le câble soit coincé entre la broche et la machine-outil.

On connait des connecteurs articulés pour orienter le câble d'une broche. Le document EP1996373 décrit une broche comprenant une unité pivotante qui porte le connecteur femelle destinée à recevoir une fiche de connexion d'un câble électrique. L'unité pivotante comprend deux parties, une première partie montée sur le boitier et une deuxième partie montée sur la première partie. Chaque partie tourne autour d'un axe distinct pour orienter le connecteur femelle. Cependant, l'unité pivotant ne permet pas d'aligner le connecteur femelle selon l'axe longitudinal du boitier.

On connait également le document EP 0922540 qui décrit une broche comprenant un support de câble d'alimentation à la sortie du boitier. Le support de câble comprend deux paliers à billes l'un sur l'autre. A la sortie du boitier, le câble passe dans un premier palier puis fait une boucle pour passer dans le deuxième palier. Les deux paliers étant positionnés l'un sur l'autre, l'encombrement est important puisque le câble est sur deux niveaux superposés selon l'axe (y) à la sortie du support de câble. De plus, la boucle du câble entre le premier et le deuxième palier empêche d'insérer la broche axialement dans une machine-outil.

Ainsi, les dispositifs existants ne fournissent pas de solutions satisfaisantes pour contrôler l'orientation du câble d'alimentation de la broche et faciliter son montage dans une machine-outil.

### Bref résumé de l'invention

Un but de la présente invention est de proposer un dispositif motorisé pour machine-outil exempt, ou qui minimise les limitations des dispositifs connus.

Selon l'invention, ces buts sont atteints notamment au moyen d'un dispositif motorisé pour machine-outil, notamment une électrobroche ou un moteur pour broche, le dispositif comprenant
- un boitier comprenant un moteur électrique alimenté par au moins un câble d'alimentation,
le dispositif comprenant un arbre rotatif à une extrémité du boitier et un guide pour ledit câble à l'extrémité opposée du boitier,
∘ l'arbre étant destiné à entrainer un outil,
∘ le guide permettant de guider la sortie du câble d'alimentation en dehors du boitier,
caractérisé en ce que le guide comprend un raccord mâle et un raccord femelle, le raccord mâle pivotant dans le raccord femelle selon d'un axe de pivotement incliné par rapport à l'axe longitudinal du dispositif, de manière à positionner ledit câble en position transversale ou en position axiale par rapport à l'axe longitudinal (B) du dispositif.

Cette solution présente notamment l'avantage par rapport à l'art antérieur de fournir un dispositif dont le guide comprend un raccord mâle qui pivote dans un raccord femelle selon un axe de pivotement incliné par rapport à l'axe longitudinal du dispositif. Le pivotement du raccord mâle dans le raccord femelle selon un axe de pivotement incliné permet de positionner le câble en position axiale ou transversale.

En position axiale, le câble à la sortie du raccord mâle est dans le prolongement de l'axe longitudinal du dispositif, ce qui permet de faciliter l'insertion du dispositif dans la machine-outil. En position axiale, le dispositif est moins encombré au niveau du guide par le câble à la sortie du boitier, ce qui facilite sa manipulation pour l'insertion dans une machine-outil par rapport aux dispositifs selon l'art antérieur. En effet, dans les broches selon EP1996373 et EP 0922540, à la sortie du raccord, le câble est décalé radialement par rapport à l'axe longitudinal de la broche ; autrement dit, le câble est au-dessus du plan selon l'axe longitudinal de la broche ce qui augmente l'encombrement de la broche au niveau du guide de câble.

Dans la présente invention, le pivotement du raccord mâle dans un raccord femelle selon un seul axe de pivotement permet d'alterner entre une position axiale et une position transversale, ce que ne permettent pas les raccords selon l'art antérieur. Les broches selon l'art antérieur utilisent deux axes de rotation pour passer d'une position axiale à une position transversale. La solution selon l'invention permet d'améliorer l'ergonomie des broches.

Le pivotement en position transversale permet d'orienter le câble à l'arrière du dispositif dans une direction transversale après son insertion, ce qui est plus pratique dans certaines configurations de machine-outil.

Selon un mode de réalisation, l'axe de pivotement incliné forme un angle de de 30 à 60 degrés par rapport à l'axe longitudinal du dispositif (B), de préférence de 40 à 50 degrés, préférentiellement 45°degrés.

Avantageusement, lorsque l'axe de pivotement forme un angle de 45°degrés par rapport à l'axe longitudinal du dispositif, le raccord mâle et le raccord femelle sont alignés bord à bord selon l'axe longitudinal du dispositif. Dans ce cas, le câble à la sortie du raccord mâle, le raccord mâle, le raccord femelle sont alignés selon l'axe longitudinal du dispositif.

Dans un mode de réalisation, le raccord mâle comprend un conduit mâle et le raccord femelle comprend un conduit femelle, le conduit mâle débouchant sur le conduit femelle lorsque le raccord mâle est couplé au raccord femelle. Les conduits mâle et femelle permettent de définir un passage à travers le guide, par exemple pour loger des connexions électriques de la machine-outil vers le dispositif.

Selon un mode de réalisation, le conduit mâle et ledit conduit femelle comprennent au moins un canal. Le canal permet de canaliser un fluide, par exemple un lubrifiant, ou un gaz, par exemple de l'air, notamment de l'air comprimé. Le gaz, par exemple l'air comprimé, peut permettre de refroidir le dispositif.

Selon un mode de réalisation, le raccord mâle ou le raccord femelle comprend au moins une rainure et au moins un joint d'étanchéité, ledit joint étant logé dans la rainure aménagée dans la paroi dudit raccord. Ainsi, le câble dans le raccord est isolé de l'air, des liquides du dispositif et de l'extérieur.

Dans un mode de réalisation, le raccord mâle et le raccord femelle comprennent des moyens d'accroché de manière à bloquer la translation du raccord mâle et du raccord femelle selon l'axe de pivotement, le moyen d'accroché du raccord mâle étant complémentaire du moyen d'accroché de raccord femelle.

Selon un mode de réalisation, le raccord femelle comprend un ergot en saillie de la paroi externe et le raccord mâle comprend une gorge destinée à recevoir ledit ergot, ou le raccord mâle comprend un ergot en saillie de la paroi externe et le raccord femelle comprend une gorge destinée à recevoir ledit ergot. L'ergot et la gorge sont des exemples de moyens d'accroché. Par exemple l'ergot peut prendre la forme d'un anneau qui s'étend radialement depuis la paroi du raccord femelle/mâle, et destiné à se loger dans la gorge du raccord complémentaire.

Dans un mode de réalisation, le montage du raccord mâle dans le raccord femelle se fait par clipsage. Par clipsage, on entend « déformation élastique »; par exemple, le raccord mâle est emmanché en force dans le raccord femelle jusqu'à ce que l'anneau en saillie de la paroi du raccord mâle se loge dans la gorge correspondante du raccord femelle.

Selon un mode de réalisation, le raccord mâle comprend un logement dans lequel se loge une gaine, ladite gaine permet de guider ledit câble à la sortie du conduit mâle. Avantageusement, ladite gaine est en outre articulée pour contrôler l'orientation du câble à la sortie de ladite gaine. Par exemple la gaine est une gaine annelée, par exemple en polyamide, notamment une gaine PMA.

Dans un mode de réalisation, ladite gaine est clipsée, moulée, ou vissée dans ledit logement du raccord mâle.

Selon un mode de réalisation, ledit raccord mâle comprend des moyens de verrouillage pour bloquer la translation de la gaine selon l'axe longitudinal du dispositif. Par exemple, le raccord comprend au moins deux ouvertures diamétralement opposées sur la paroi du logement dans lesquelles viennent se loger les deux extrémités d'un cavalier de fixation en forme de fer à cheval ou clip. Le cavalier ou clip permet de bloquer la gaine dans le logement.

Selon un mode de réalisation, le diamètre du boitier est compris entre 12 mm et 40 mm.

Dans un mode de réalisation, le guide est en métal ou alliage. Les guides en métal ou alliage résistent notamment à un flux d'air comprimé, car ils sont peu déformables. Les guides en métal ou alliage sont également durables et résistent à des utilisations prolongées, notamment pour des machines-outils qui fonctionnent sur des longues durées.

Selon un mode de réalisation, le raccord mâle et le raccord femelle comprennent des moyens de blocage de manière à limiter l'amplitude de rotation du raccord mâle dans le raccord femelle selon l'axe de pivotement (A), par exemple pour une amplitude comprise entre 80° et 100° entre la position axiale et la position transversale, de préférence entre 85° et 90°, préférentiellement 90°. Le moyen de blocage peut être un segment en saillie de la paroi du raccord mâle (et respectivement de la paroi femelle). Le segment s'étend radialement sur une partie du pourtour de la paroi, en fonction de l'amplitude de rotation recherchée. Lorsque le segment du raccord mâle vient en appui sur le segment du raccord femelle, la rotation est bloquée.

Il est avantageux de pouvoir bloquer la rotation du raccord pour éviter une torsion du câble d'alimentation, par exemple des fils du bobinage du stator du moteur électrique. Une torsion peut arriver lorsque la rotation est supérieure à 360°, autrement dit plus d'un tour de rotation.

Selon un mode de réalisation, le dispositif est une broche, de préférence une électrobroche. Dans un autre mode de réalisation, le dispositif est un moteur pour broche.

Dans un mode de réalisation, le boitier comprend une flasque pour fixer le dispositif sur la machine-outil, de préférence sur un module de la machine-outil destiné à recevoir ledit dispositif.

Dans un mode de réalisation, le guide est vissé dans le boitier. Le guide peut aussi être chassé ou collé dans le boitier. Dans ce cas, la rotation et la translation du guide par rapport au boitier sont bloquées.

Dans un mode de réalisation, le raccord mâle et le boitier comprennent des moyens de rotation complémentaires qui coopèrent pour permettre la rotation du guide par rapport au boitier selon un axe C parallèle ou aligné avec l'axe longitudinal B. Sur le raccord mâle, les moyens de rotation sont à l'extrémité opposés de l'extrémité du raccord mâle comprenant les moyens d'accroché avec le raccord femelle. Les moyens de rotation permettent la rotation du raccord, et ainsi du guide, par rapport au boitier. Mais les moyens de rotation bloquent la translation du raccord mâle par rapport au boitier.

Les moyens de rotation comprennent par exemple d'une part une protrusion annulaire en saillie de la paroi interne du boitier, et d'autre part une cavité aménagée dans la paroi externe de la portion du raccord mâle inséré dans le boitier, la protrusion étant engagée dans la cavité par clipsage par exemple. Les moyens de rotation peuvent être identiques aux moyens d'accroché du raccord mâle au raccord femelle.

Dans ce dernier mode de réalisation, le raccord mâle pivote dans le raccord femelle selon l'axe de pivotement grâce aux moyens d'accroché pour positionner le câble par rapport au boitier dans un plan (x,y). La rotation du guide par rapport au boitier grâce aux moyens de rotation permet d'ajouter une dimension (z) et de positionner le câble orienté selon l'axe de pivotement dans un espace à trois dimensions en forme de cône. Ainsi, dans ce mode de réalisation, l'utilisateur peut choisir la position du câble dans un espace conique.

Les moyens de rotation peuvent aussi avantageusement comprendre des moyens de blocage pour limiter l'amplitude de rotation du raccord mâle dans le boitier. Ces moyens de blocage peuvent être sous forme de segments complémentaires comme décrits pour les moyens de blocage de pivotement du raccord mâle dans le raccord femelle.

L'invention concerne également un guide pour dispositif selon l'invention, ledit guide comprenant un raccord mâle et raccord femelle, le raccord mâle pivotant dans le raccord femelle selon d'un axe de pivotement incliné par rapport à l'axe longitudinal du dispositif, de manière à positionner le câble d'alimentation du dispositif en position transversale ou en position axiale par rapport à l'axe longitudinal du dispositif.

Le guide peut être fabriqué par fabrication additive, par exemple impression 3D.

L'invention concerne en outre un procédé de montage d'un dispositif motorisé dans une machine-outil, le procédé comprenant :
- Fournir un dispositif motorisé selon l'invention;
- Pivoter le raccord mâle ou le raccord femelle selon l'axe de pivotement incliné de manière à positionner le câble en position axiale par rapport à l'axe longitudinal du dispositif;
- Insérer le dispositif dans la machine-outil ;
- Pivoter le raccord mâle ou le raccord femelle selon l'axe de pivotement incliné de manière à positionner le câble en position transversale par rapport à l'axe longitudinal du dispositif;

Dans un mode de réalisation, le procédé comprend :
- Fournir un dispositif selon l'invention dans laquelle le raccord femelle comprend un ergot en saillie de la paroi externe et le raccord mâle comprend une gorge destinée à recevoir ledit ergot, ou le raccord mâle comprend un ergot en saillie de la paroi externe et le raccord femelle comprend une gorge destinée à recevoir ledit ergot ;
- Clipser le raccord mâle dans le raccord femelle de manière à positionner ledit ergot dans ladite gorge.

Dans un mode de réalisation, le procédé comprend:
i) Fournir un dispositif selon l'une des revendications 1 à 9 dans lequel le raccord mâle et le boitier comprennent des moyens de rotations complémentaires qui coopèrent pour permettre la rotation du guide par rapport au boitier selon un axe C parallèle ou aligné avec l'axe longitudinal B;
v) Faire tourner le guide par rapport au boitier selon l'axe de rotation C avant ou après l'insertion du dispositif dans la machine-outil;

Dans ce mode de réalisation, le système offre une plus grande flexibilité à l'utilisateur qui peut choisir de positionner le câble dans un espace à trois dimensions (x,y,z). L'utilisateur a plusieurs possibilités :
- A) faire tourner le raccord mâle dans le boitier jusqu'à la position choisie; puis insérer le dispositif dans la machine-outil; et enfin faire pivoter le raccord mâle dans raccord femelle pour orienter le câble comme souhaité;
- B) Insérer le dispositif dans la machine-outil; faire tourner le raccord mâle dans le boitier jusqu'à la position choisie; et enfin faire pivoter le raccord mâle dans raccord femelle pour orienter le câble comme souhaité;

L'invention concerne également un système comprenant :
- Un dispositif selon l'invention;
- Un module destiné à être monté sur une machine-outil, ledit module comprenant un logement pour recevoir ledit dispositif, ledit module comprenant des moyens de fixation pour fixer ledit dispositif sur ledit module lorsque ledit dispositif est inséré dans le logement.

Le module est un élément destiné à être installé ou monté sur une machine-outil. Par exemple, le module est un élément de la machine-outil qui est destiné à accueillir le dispositif. Le module peut être monté de façon réversible ou irréversible sur la machine-outil. Le module comprend un logement qui a des dimensions complémentaires à celles du boitier. Pour cela, le logement a une largeur légèrement supérieure au diamètre du boitier de façon à pouvoir y insérer le boitier. Le guide est externe au logement après insertion du boitier dans le logement, de façon à ce que l'utilisateur puisse manipuler le guide après insertion pour orienter le câble dans la position souhaitée.

Dans un mode de réalisation, le boitier du dispositif comprend une flasque équipée d'au moins deux trous traversants, de préférence taraudés, pour fixer ledit dispositif audit module. Les trous de la flasque peuvent déboucher sur des trous correspondants dans le module, par exemple des trous borgnes ou oblongs. D'autres modes de fixation qui permettent de fixer le dispositif au module peuvent être envisagés.

L'invention concerne aussi un support de données informatique contenant des données destinées à être lues par un dispositif de fabrication additive pour fabriquer un objet, lesdites données représentant la forme d'un guide pour dispositif selon l'invention, ledit guide comprenant un raccord mâle et un raccord femelle, le raccord mâle pivotant dans le raccord femelle selon d'un axe de pivotement incliné par rapport à l'axe longitudinal du dispositif, de manière à positionner ledit câble en position transversale ou en position axiale par rapport à l'axe longitudinal du dispositif.

Dans la présente invention, on entend par « position axiale » une position où le câble est orienté selon l'axe longitudinal du dispositif, le câble étant aligné sur l'axe longitudinal du dispositif. Les termes « position axiale » désignent aussi la position ou le câble est sensiblement selon l'axe longitudinal du dispositif : autrement dit où au moins la portion du câble à la sortie du guide est selon l'axe longitudinal du dispositif, puis le câble peut dévier de quelques degrés, par exemple entre 1 et 10° de l'axe longitudinal du dispositif.

Dans la présente invention, on entend par « position transversale » une position où le câble fait un angle de 90° par rapport à l'axe longitudinal du dispositif. Les termes « position transversale » désignent également la position où le câble fait un angle 60° et 120° par rapport à l'axe longitudinal du dispositif, de préférence entre 75° et 105°.

Dans la présente invention, le guide permet de guider le câble d'alimentation du moteur électrique. Dans un premier cas, le moteur peut être compris dans la broche. Dans ce premier cas, le dispositif motorisé est une électrobroche dans laquelle le moteur et les paliers sont dans le boitier. Alternativement, dans un deuxième cas, le moteur peut être à l'extérieur du boitier de la broche. Dans ce deuxième cas, le dispositif motorisé est un moteur pour broche, le moteur étant destiné à s'accoupler sur la broche. Dans ce deuxième cas, la broche désigne le boitier qui comprend notamment les paliers dans lesquels tourne l'arbre rotatif.

Les modes de réalisation décrits pour le dispositif selon l'invention s'appliquent mutatis mutandis au guide, au procédé et au support informatique selon la présente invention, et vice versa.

Les termes « dispositif» et « dispositif motorisé » selon l'invention sont interchangeables.

### Brève description des figures

Des exemples de mise en oeuvre de l'invention sont indiqués dans la description illustrée par les figures annexées dans lesquelles :
La figure 1 illustre une vue de coupe d'un premier mode de réalisation d'un dispositif selon l'invention ;
La figure 2 représente un agrandissement du guide selon le premier mode de réalisation de la figure 1 ;
La figure 3 représente un raccord femelle d'un guide d'un dispositif selon un deuxième mode de réalisation ;
La figure 4 représente une vue du raccord mâle d'un guide d'un dispositif selon le deuxième mode de réalisation ;
La figure 5 représente un dispositif selon un troisième mode de réalisation;
La figure 6 représente un système selon l'invention.

### Exemple(s) de mode de réalisation de l'invention

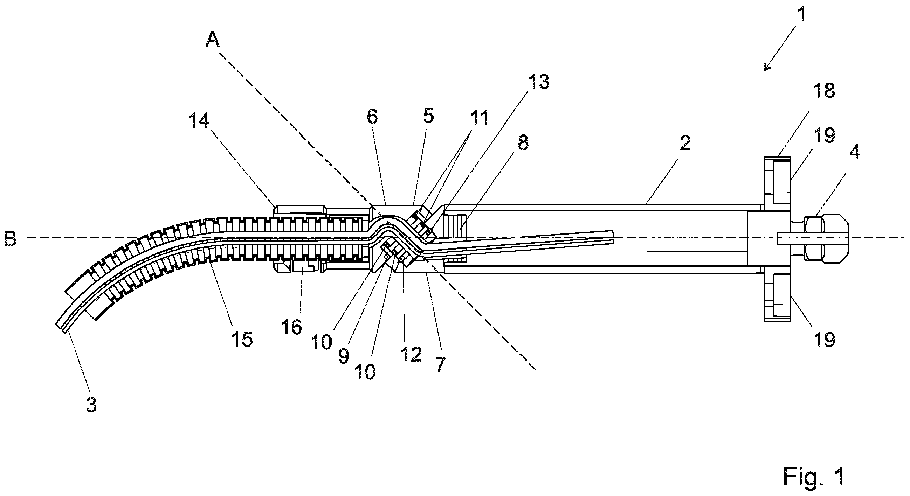

Plusieurs modes de réalisation de la présente invention sont représentés sur les figures 1-6, mais l'invention ne se limite pas à ces modes de réalisation.

Dans les modes de réalisation représentés sur les figures 1 à 6, le dispositif est une broche, plus particulièrement une électrobroche.

La broche 1 selon le premier et le deuxième mode de réalisation comprend un boitier 2 qui comprend un moteur électrique (non représenté). Le moteur est alimenté par un câble d'alimentation 3.

La broche 2 comprend un arbre 4 fixé à une extrémité du boitier 2 et un guide 5 pour ledit câble 3 fixé à l'extrémité opposée du boitier 2. L'arbre 4 est couplé à un mandrin (non représenté) destiné à maintenir un outil (non représenté), par exemple un outil de fraisage ou tout autre outil pour usiner une pièce. Le boitier 2 comprend une flasque 18 équipée de deux trous 19 traversants, qui peuvent être taraudés, pour fixer la broche sur la machine-outil. Le guide 5 permet de guider la sortie du câble 3 d'alimentation en dehors du boitier 2.

Le guide 5 comprend un raccord mâle 6 et un raccord femelle 7, le raccord mâle 6 pivotant dans le raccord femelle 7 selon d'un axe de pivotement incliné A par rapport à l'axe longitudinal de la broche 1. Le pivotement du raccord mâle 6 dans le raccord femelle 7 permet de positionner le câble 3 en position transversale ou en position axiale par rapport à l'axe longitudinal de la broche 1.

Dans le premier mode de réalisation, l'axe de pivotement A forme un angle de 45° par rapport à l'axe longitudinal B de la broche 1. Ainsi, en position axiale, le raccord mâle 6 est aligné bord à bord avec le raccord femelle 6. Ainsi, les raccords mâle 6 et femelle 7 sont alignés sur l'axe longitudinal B de la broche.

Pour passer en position transversale, l'opérateur manipule le raccord mâle 6 pour induire un pivotement selon l'axe incliné A jusqu'à ce que le raccord mâle fasse un angle de 90° avec l'axe longitudinal B. Ainsi, dans ce mode de réalisation, l'axe de pivotement incliné à 45° permet de positionner le câble d'alimentation selon l'axe longitudinal B de la broche en position axiale, et avec un angle de 90° par rapport à l'axe longitudinal B de la broche.

Le raccord mâle 6 comprend un segment mâle 20 et le raccord femelle 7 comprend segment femelle 21 de manière à limiter l'amplitude de rotation du raccord mâle 6 dans le raccord femelle 7 selon l'axe de pivotement (A). Dans ce mode de réalisation, l'amplitude entre la position axiale et la position transversale est de 90°.

Le raccord femelle 7 comprend un conduit femelle 8. Le raccord mâle 6 comprend un conduit mâle 9. Lorsque le raccord mâle 6 est couplé au raccord femelle 7, le conduit mâle 9 débouche sur le conduit femelle 8, le câble d'alimentation 3 passant dans le conduit mâle 9 et dans le conduit femelle 8.

Le raccord mâle 6 ou le raccord femelle 7 peut comprendre un ou plusieurs joints d'étanchéité logés dans une rainure: les joints assurent l'étanchéité du guide 5 pour empêcher les liquides de s'infiltrer dans les conduits 8,9 où se trouve le câble d'alimentation 3.

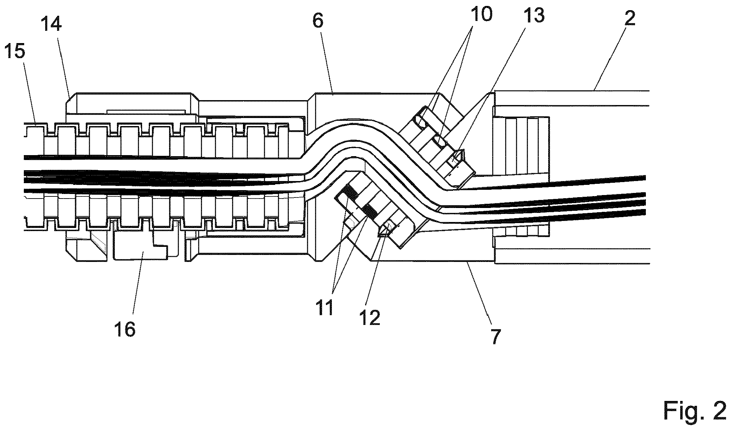

Selon le premier mode de réalisation représenté sur les figures 1 et 2, le raccord mâle 6 comprend deux rainures 10 dans lesquelles sont logés deux joints 11 .

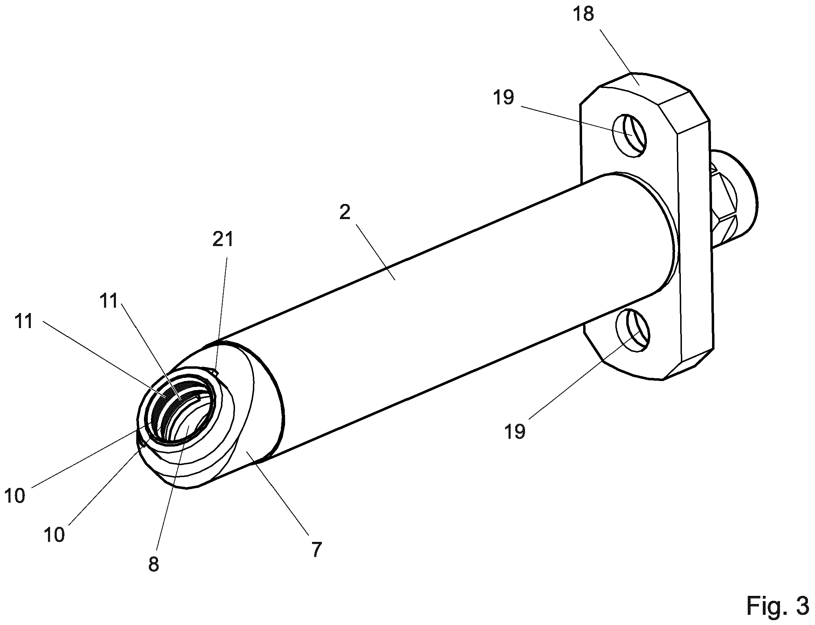

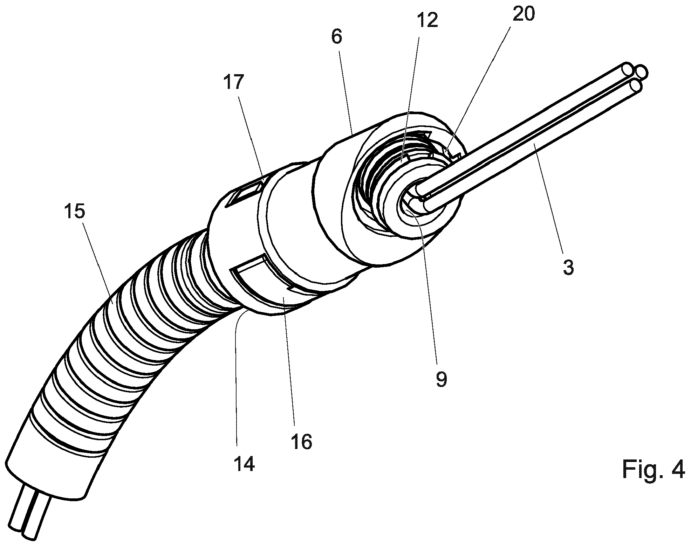

Selon le deuxième mode de réalisation représenté sur les figures 3 et 4, le raccord femelle 7 comprend deux rainures 10 dans lesquelles sont logés deux joints 11.

Le raccord mâle 6 comprend un ergot annulaire 12 qui s'étend radialement depuis la paroi du raccord mâle 6, et destiné à se loger dans une gorge 13 du raccord femelle 7. Lorsque l'ergot 12 est dans la gorge 13, le raccord mâle 6 est couplé au raccord femelle 7 : la translation du raccord mâle 6 et du raccord femelle 7 selon l'axe de pivotement incliné (A) est bloquée. Dans un mode de réalisation non représenté, l'ergot est sur le raccord femelle 7 et la gorge sur le raccord mâle.

Le raccord mâle 6 comprend un logement 14 dans lequel vient s'insérer une gaine 15. La gaine 15 permet de guider le câble 3 à la sortie du conduit mâle 9. Dans ce mode de réalisation, la gaine 15 est articulée pour contrôler l'orientation du câble 3 à la sortie de ladite gaine 15. La gaine 15 est clipsée au raccord par un clip ou cavalier de fixation 16 qui enjambe la gaine 15, les deux extrémités du clip 16 venant se loger dans deux ouvertures 17 aménagées dans la paroi du logement 16. De cette façon, la translation de la gaine 15 selon l'axe longitudinal de la broche est verrouillée.

Le guide 5 selon l'invention peut être imprimé par fabrication additive ou impression 3D. Alternativement, le guide 5 peut être usiné. Dans ce mode de réalisation, le guide est en métal imprimé par impression 3D.

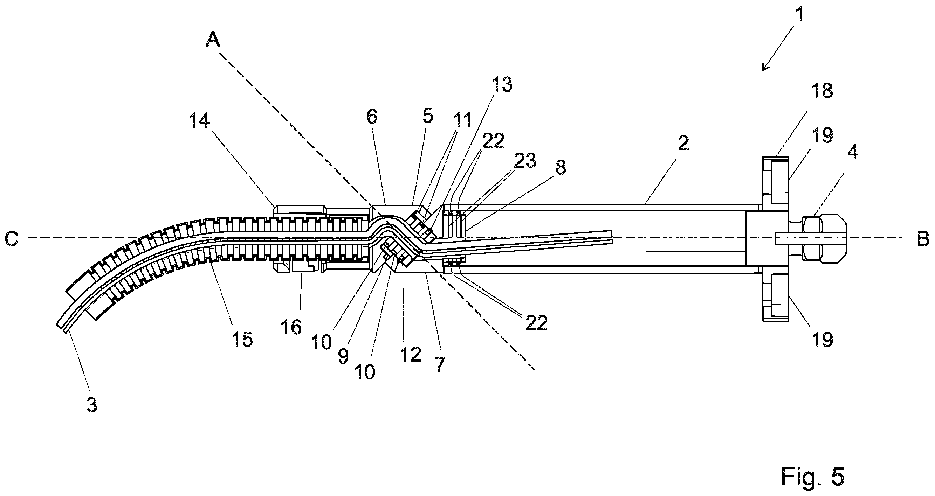

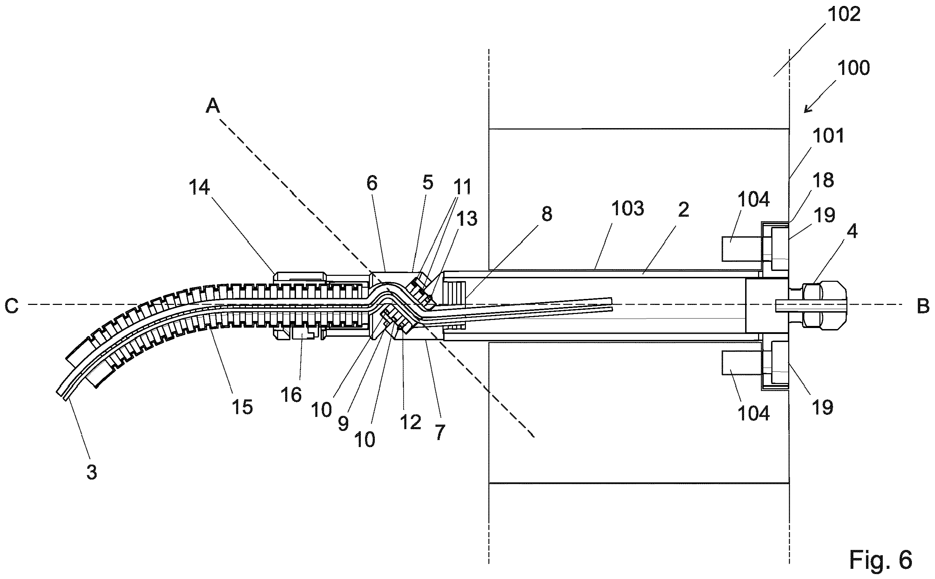

Les figures 5 et 6 représentent respectivement un troisième mode de réalisation du dispositif et un système selon l'invention. Pour simplifier la compréhension et la lecture, les mêmes signes de références ont été repris pour les éléments déjà décrits sur les figures 1 à 4.

La broche 1 de la figure 5 comprend des moyens de rotation pour permettre la rotation du raccord mâle 6 par rapport au boitier 2 autour d'un axe C aligné sur l'axe longitudinal B du de la broche 1. Les moyens de rotations permettent ainsi la rotation du guide 5 lorsque le raccord mâle 6 est couplé au raccord femelle 7. Les moyens de rotation comprennent d'une part une protrusion annulaire 22 en saillie de la paroi interne du boitier 2, et d'autre part une cavité 23 aménagée dans la paroi externe de la portion du raccord mâle 6 inséré dans le boitier 2.

La figure 6 représente un système 100 selon l'invention comprenant la broche 1 selon le premier mode de réalisation. Dans un mode de réalisation non représenté, le système peut comprendre le la broche selon le troisième mode de réalisation. Le système 100 comprend un module 101 monté sur une machine-outil 102 (partiellement représenté). Le module 101 comprend un logement 103 dans lequel est insérée la broche 1. Après insertion, le boitier 2 est logé dans le logement 103, alors que le guide dépasse du logement 103. Le module 102 comprend deux trous borgnes qui débouchent sur les trous traversants 19 de la flasque 18 de la broche 1. Les trous traversants 19 et les trous borgnes sont taraudés ce qui permet de visser la broche 1 sur le module 102.

### Numéros de référence employés sur les figures

- 1: Broche
- 2: Boitier
- 3: Câble d'alimentation
- 4: Arbre
- 5: Guide pour le câble d'alimentation
- 6: Raccord mâle
- 7: Raccord femelle
- A: Axe incliné
- B: Axe longitudinal de la broche
- 8: Conduit femelle
- 9: Conduit mâle
- 10: Rainure
- 11: joint
- 12: Ergot annulaire
- 13: Gorge
- 14: Logement
- 15: Gaine
- 16: Clip ou cavalier de fixation
- 17: Ouverture
- 18: Flasque
- 19: trou
- 20: Segment mâle
- 21: Segment femelle
- 22: Protrusion annulaire
- 23: Cavité

- 100: Système selon un mode de réalisation
- 101: Module
- 102: Portion de machine-outil
- 103: Logement
- 104: Trou borgne taraudé

## Revendications

1. Dispositif motorisé (1) pour machine-outil (102), notamment une électrobroche ou un moteur pour broche, le dispositif (1) comprenant
- un boitier (2) comprenant un moteur électrique alimenté par au moins un câble d'alimentation (3),
le dispositif (1) comprenant un arbre (4) rotatif à une extrémité du boitier (2) et un guide (5) pour ledit câble (3) à l'extrémité opposée du boitier (2),
∘ l'arbre (4) étant destiné à entrainer un outil,
∘ le guide (5) permettant de guider la sortie du câble (3) d'alimentation en dehors du boitier (2),
**Caractérisé en ce que** le guide (5) comprend un raccord mâle (6) et un raccord femelle (7), le raccord mâle (6) pivotant dans le raccord femelle (7) selon d'un axe de pivotement incliné (A) par rapport à l'axe longitudinal (B) du dispositif (1), de manière à positionner ledit câble (3) en position transversale ou en position axiale par rapport à l'axe longitudinal (B)du dispositif (1).

2. Dispositif (1) selon la revendication 1, dans lequel l'axe de pivotement incliné (A) forme un angle de 30 à 60 degrés par rapport à l'axe longitudinal (B) du dispositif (1), de préférence de 40 à 50 degrés, préférentiellement 45° degrés.

3. Dispositif (1) selon l'une des revendications 1 ou 2, dans lequel le raccord mâle (6) comprend un conduit mâle (9) et le raccord femelle (7) comprend un conduit femelle (8), le conduit mâle (9) débouchant sur le conduit femelle (8) lorsque le raccord mâle (6) est couplé au raccord femelle (7).

4. Dispositif (1) selon l'une des revendications 1 à 3, dans lequel le raccord mâle (6) et le raccord femelle (7) comprennent des moyens d'accroché (12, 13) de manière à bloquer la translation du raccord mâle (6) et du raccord femelle (7) selon l'axe de pivotement (A), le moyen d'accroché du raccord mâle (6) étant complémentaire du moyen d'accroché de raccord femelle (7).

5. Dispositif (1) selon l'une des revendications 1 à 4, dans lequel le raccord mâle (6) comprend un logement (14) dans lequel se loge une gaine (15), ladite gaine (15) permettant de guider ledit câble (3) à la sortie du conduit mâle (9).

6. Dispositif (1) selon l'une des revendications 1 à 5, dans lequel le raccord mâle (6) et le raccord femelle (7) comprennent des moyens de blocage (12, 13) de manière à limiter l'amplitude de rotation du raccord mâle (6) dans le raccord femelle (7) selon l'axe de pivotement (A), par exemple pour une amplitude comprise entre 80° et 100° entre la position axiale et la position transversale, de préférence entre 85° et 90°, préférentiellement 90°.

7. Dispositif (1) selon l'une des revendications 1 à 6, dans lequel le dispositif est une broche ou un moteur pour broche.

8. Dispositif (1) selon l'une des revendications 1 à 7, dans lequel le raccord mâle (6) et le boitier (2) comprennent des moyens de rotation complémentaires qui coopèrent pour permettre la rotation du guide (5) par rapport au boitier (2) selon un axe C parallèle ou aligné avec l'axe longitudinal B.

9. Guide (5) pour dispositif (1) selon l'une des revendications 1-8, ledit guide (5) comprenant un raccord mâle (6) et raccord femelle (7), le raccord mâle (6) pivotant dans le raccord femelle (7) selon d'un axe de pivotement incliné (A) par rapport à l'axe longitudinal (B) du dispositif (1), de manière à positionner le câble d'alimentation (3) du dispositif (1) en position transversale ou en position axiale par rapport à l'axe longitudinal (B) du dispositif (1).

10. Procédé de montage d'un dispositif(1) dans une machine-outil, le procédé comprenant :
- i) Fournir un dispositif (1) selon l'une des revendications 1 à 9;
- ii) Pivoter le raccord mâle (6) ou le raccord femelle (7) selon l'axe de pivotement incliné (A) de manière à positionner le câble (3) en position axiale par rapport à l'axe longitudinal (B) du dispositif (1) ;
- iii) Insérer le dispositif (1) dans la machine-outil (102) ;
- iv) Pivoter le raccord mâle (6) ou le raccord femelle (7) selon l'axe de pivotement (A) de manière à positionner le câble (3) en position transversale par rapport à l'axe longitudinal (B) du dispositif (1) ;

11. Procédé de montage selon la revendication 10, le procédé comprenant :
- i) Fournir un dispositif (1) selon l'une des revendications 1 à 9 dans lequel le raccord mâle (6) et le boitier (2) comprennent des moyens de rotations complémentaires (22,23) qui coopèrent pour permettre la rotation du guide (5) par rapport au boitier (2) selon un axe C parallèle ou aligné avec l'axe longitudinal B ;
- v) Faire tourner le guide (5) par rapport au boitier (2) selon l'axe de rotation C avant ou après l'insertion du dispositif (1) dans la machine-outil (102);

12. Procédé de montage selon l'une des revendications 10 à 11, le procédé comprenant:
- Fournir un dispositif (1) selon l'une des revendications 1 ou 9, le raccord femelle (7) comprend un ergot (12) en saillie de la paroi externe et le raccord mâle (6) comprend une gorge (13) destinée à recevoir ledit ergot (12), ou le raccord mâle (6) comprend un ergot (12) en saillie de la paroi externe et le raccord femelle (7) comprend une gorge (13) destinée à recevoir ledit ergot (12) ;
- Clipser le raccord mâle (6) dans le raccord femelle (7) de manière à positionner ledit ergot (12) dans ladite gorge (13).

13. Support de données informatiques contenant des données destinées à être lues par un dispositif de fabrication additive pour fabriquer un objet, lesdites données représentant la forme d'un guide (5) pour un dispositif (1) pour machine-outil selon l'une des revendications 1 à 9, ledit guide (5) comprenant un raccord mâle (6) et un raccord femelle (7), le raccord mâle (6) pivotant dans le raccord femelle (7) selon d'un axe de pivotement incliné (A) par rapport à l'axe longitudinal (B) du dispositif (1), de manière à positionner ledit câble (3) en position transversale ou en position axiale par rapport à l'axe longitudinal (B) du dispositif (1).

14. Système (100) comprenant :
- Un dispositif (1) selon l'une des revendications 1 à 9;
- Un module (101) destiné à être monté sur une machine-outil (102), ledit module (101) comprenant un logement (103) pour recevoir ledit dispositif (1), ledit module (102) comprenant des moyens de fixation pour fixer ledit dispositif (1) sur ledit module (101) lorsque ledit dispositif (1) est inséré dans le logement (103).

15. Système (100) selon la revendication 14, dans lequel le boitier (2) du dispositif comprend une flasque (18) équipée d'au moins deux trous traversants (19), de préférence taraudés, pour fixer ledit dispositif (1) audit module (101).
